# EUROPEAN PATENT SPECIFICATION

(11) **EP 2 330 330 B1**
(45) Date of publication and mention of the grant of the patent: **09.10.2013**
(21) Application number: 09177547.8
(22) Date of filing: 30.11.2009
(51) Int. Cl.: F16L 37/23, F16L 55/07, B60K 15/04, B60K 15/07, F17C 1/00, F17C 5/02, F17C 13/00, F17C 13/04, F17C 13/06, F16K 1/30

(54) **Filling adapter kit for LPG tank refilling**
Einfülladaptersatz zur Tankfüllung mit Flüssiggas
Kit adaptateur pour le remplissage d'un réservoir de GPL

(43) Date of publication of application: 08.06.2011
(73) Proprietor: LUXEMBOURG PATENT COMPANY S.A., 7440 Lintgen (LU)
(72) Inventor: Goffin, Claude, 6761, Chenois (BE)
(74) Representative: Office Freylinger

(56) References cited:
- EP-A2- 0 959 293
- FR-A1- 2 835 038
- FR-A1- 2 878 313
- FR-A6- 2 064 714

## Description

### Technical field

The present invention generally relates to LPG fueled vehicles and more specifically to the filling operation of LPG tanks.

### Background Art

Those driving a car operating on Liquefied Petroleum Gas (hereinafter referred to as LPG, but also called Autogas) know it, an annoying aspect of this fuel is that different filling systems are used in the LPG refueling networks of the various European countries.

As a matter of fact, three filling unit systems are currently co-existing in Europe:
- the "ACME thread": used in Austria, Belgium, Germany, Poland and Ireland;
- the "BAYONET" or "quick coupling" used in the Netherlands, UK and Poland;
- the "DISH coupling" used in Italy, France, Poland, Portugal, Greece and Spain.

This makes the refueling abroad difficult and negatively affects the use of LPG vehicles in terms of safe, easy and environmentally friendly refueling.

To remedy this situation and to ensure the filling of all the LPG vehicles in all the European fleet without any difficulties and prejudice for safety and environment, Regulation No. 67 of the United Nations Economic Commission for Europe (published in the Official Journal of the European Union L 72/1 of 14.03.2008) provides for a so-called Euro-connector that should in the future equip all vehicles operating on LPG.

The Euro-connector is defined in Annex 9 of said Regulation, some main features of which are:
- it contains one soft-seated non-return valve;
- it is conceived with a male section and its overall dimensions are roughly contained in a cylinder of 33 mm in diameter and height 40 mm (corresponding to its maximum protrusion);
- the dead volume between the front sealing surface and the front of the non-return valve does not exceed 0.1 cm³;
- the base of the Euro-connector is provided with an outer thread (M33x2).

The introduction of the Euro-connector on new vehicles and the installation of corresponding filling nozzles at filling points (gas stations etc.) will cause some difficulties. Equipping all filling points with Euro-connector guns will make direct filling impossible for cars with the older, national connectors.

EP 0 959 293 A2 and FR 2 878 313 A1 disclose a filling adapter as encompassed by the filling adapter kit of claim 1.

### General Description of the Invention

The present invention was developed based on the observation that when filling points will be equipped with fillings guns adapted for the Euro-connector, filling adapters will be required to fill-up cars equipped with older, national filling connectors.

Hence, during a transitional period, filling adapters will be necessary. Instead of, e.g., ACME or Bayonet to DISH filling adapters, the required adapters will be Euro-connector to ACME, Euro-connector to bayonet or Euro-connector to DISH (i.e. Euro to national connector). And such filling adapters will of course need to meet the requirements of the Regulation No. 67. A problem is however that said Regulation requires a non-return valve in the body of the Euro-connector. When such filling adapter will be fitted on a national connector, upon filling, gas will be imprisoned between the non-return valve in the Euro-connector type filling adapter and the non-return valve in the body of the national connector. The high pressure in the volume between these two non-return valves makes it impossible to remove the Euro-connector adapter by hand due to the high tension in the mechanical coupling. Neither is it possible to manually depress the non-return valve in the Euro-connector filling adapter due to the high pressure.

In order to overcome the above-mentioned problem, the present invention proposes a filling adapter and a tool that may generally be provided in the form of a kit.

According to one optional aspect of the invention, there is proposed a filling adapter comprising a body with a flow passage therein extending between an inlet port and an outlet port. The inlet port is part of a first connector portion configured to allow connection to a filling line; and the outlet port is part of a second connector portion configured for connection to a filling unit. A non-return valve is provided in the flow passage and cooperates with a seat therein, the non-return valve allowing, in an open position, fluid passage from the inlet port to the outlet port and being accessible from the exterior of the adapter through said inlet port.

In a practical embodiment for GPL application, the first connector portion is configured in accordance with the Euro-connector profile/section as defined by UN/ECE Regulation No. 67 cited above. The second connector portion may thus be configured for connection and/or mounting onto a national GPL filling unit, typically a Dish coupling, Bayonet coupling or ACME thread.

According to another optional aspect of the present invention, there is proposed a tool comprising:
- a body with a cavity therein adapted for engagement on the first connector portion of the filling adapter, at least;
- a protrusion in the cavity;
- pressing means on the tool that cooperate with pressing means on the filling adapter configured so that the tool can be engaged on the filling adapter to bring the pressing means in an initial operating position and so that rotating the tool relative to the filling adapter results in a corresponding axial displacement of the tool relative to said filling adapter that causes the protrusion to come into abutment with the non-return valve and pushes the latter off its seat.

The tool thus permits, by simple rotation thereof about itself, to lift the non-return valve off its seat and thereby release the gas trapped between the two non-return valves. This also reduces the mechanical tension on the cooperating fittings (of filling adapter and filling unit) so that removal of the filling adapter is made easier.

The second connector portion comprises a screw thread on a sleeve section adpated for mounting/connection on/to the filling unit and the filling adapter has coupling means that cooperate with respective coupling means on the tool for transmitting both a screwing and an unscrewing torque. The coupling means on the tool are preferably provided in a further (second) tool cavity in the tool body adapted for engagement onto the first connector portion. According to one variant, the coupling means on the filling adapter comprise a pair of diametrically opposed flat lands that can be engaged by a corresponding pair of flat lands in the second cavity. The flat lands on the filling adapter may be arranged at the base of the Euro-connector profile (first connector fitting/portion) so that it interrupts the M33 thread (however keeping its functionality). Alternatively these cooperating coupling means could be of the bayonet type or any other appropriate coupling.

Thanks to this particular design of the filling adapter (that preferably cooperates with the second cavity of the tool) it is possible to easily screw and unscrew the filling adapter on/from the car's filling unit. The mounting and dismounting operations of the filling adapter can be much more easily carried out than by hand. In particular the fact that the second cavity is configured to hold and screw/unscrew the filling adapter makes it easier to install/remove the latter on a filling unit located in a narrow fuel receptacle. It also avoids hurting oneself when manipulating the metallic adapter body that may have sharp edges. In some cases temperature variations may cause mechanical stress on the threaded fittings that would make unscrewing by hand difficult, whereby this functionality is also appreciable in that respect.

Preferably, the cooperating pressing means comprise an inner thread in the first cavity that cooperates with an outer thread on the body of the filling adapter so that screwing the tool on the filling adapter causes the tool to axially move relative to the filling adapter, whereby the protrusion comes into abutment with the non-return valve and pushes the latter off its seat, as the tool is further screwed-in. In such embodiment, to avoid locking of the threads on one another, the inner thread in the first cavity may have longer axial extent than the thread on the filling adapter.

As it will appear to those skilled in the art, other designs can be used for the cooperating pressing means, provided they are able, by rotation of the tool about itself upon engagement on the filling adapter, to force the protrusion towards the valve in such a way as to push the non-return valve off its seat. For example, a cam and follower design may be suitable.

One or more oriented through holes may be provided in the wall of the first cavity to permit escape of the released gas. These holes shall be oriented towards the car body, i.e. not towards the user, whereby burns can be avoided.

The first connector portion being preferably configured as a Euro-connector, the filling adapter shall comprises the following features:
- the non-return valve is soft seated;
- the dead volume between the front sealing surface and the front of the non-return valve does not exceed 0.1 cm³;
- it comprises a thread at the base of the connector portion (and the inner thread in the tool cavity preferably cooperates with this thread).

A resilient ring may be provided in the second cavity for retaining the filling adapter therein. This avoids falling of the adapter during installation or removal procedures. The exterior surfaces of the cavity(ies) may advantageously be provided with grip areas for a better grasp and handling of the tool.

The tool can be made from metal or plastic. From the industrial point of view, plastic is clearly preferably for cost reasons: the tool can be easily integrally manufactured by injection molding.

### Brief Description of the Drawings

Further details and advantages of the present invention will be apparent from the following detailed description of not limiting embodiments with reference to the attached drawings, wherein:
Fig. 1: is a longitudinal cross-sectional view through a conventional filling unit known as Dish coupling;
Fig. 2: is a longitudinal cross sectional view through a preferred embodiment of the present filling adapter configured as Euro-connector to a Dish coupling;
Fig.3: is a perspective view of the filling adapter of Fig.3;
Fig. 4: is a perspective view of the present tool;
Fig. 5: is longitudinal cross sectional view through the tool of Fig.3;
Fig. 6: is longitudinal cross sectional view through the assembly of the tool on the filling adapter, with lifter non-return valve.

### Description of a Preferred Embodiment

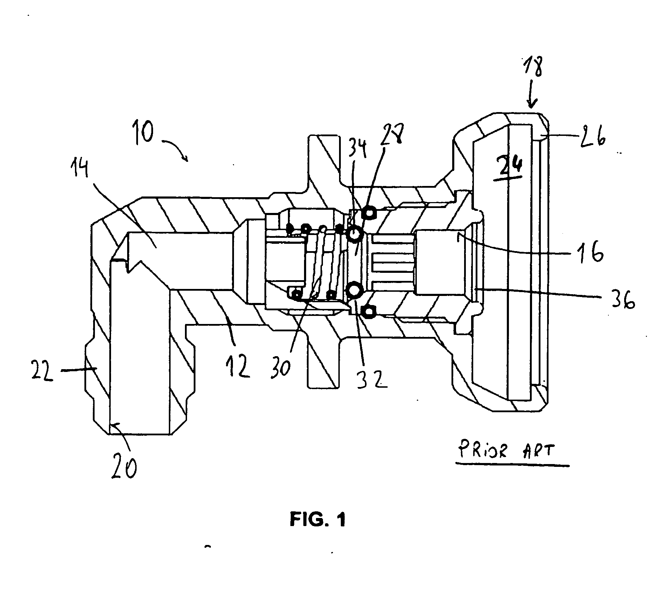

One of the three conventional types of filling unit systems that are currently co-existing in Europe is shown in Fig.1. This type of filling unit 10 is known as "DISH coupling" and is used in Italy, France, Poland, Portugal, Greece and Spain. It comprises a housing 12 with an internal channel 14 extending from an inlet port 16 at the bottom of the dish-shaped connector fitting 18 to an outlet port 20. An external thread 22 is arranged about the extremity of the housing at the outlet port 20 for mounting to a hose or duct (not shown) connecting to the vehicle LPG tank (not shown).

As it is known in the art, the dish connector 18 defines a cavity 24 that receives the tip of a filling nozzle (not shown). During a refueling operation the filling nozzle locks on the radial flange 26 at the entry of the cavity 24. LPG fuel flows through the inlet port 16 through the channel 14 and the outlet port 20 to the tank. Back flow of fuel is prevented by means of a non-return valve 28 arranged in the channel 14. It is biased in counter-flow direction by means of a spring 30 and cooperates with a valve seat 32 in the channel 14. An O-ring 34 is mounted in the top sealing surface of valve 28 and rests on the valve seat 32 in the closed position (as shown in Fig.1).

Reference sign 36 indicates a threaded fitting downstream (in flow direction) of dish 18 that is conventionally provided to allow connection of filling adapters when traveling abroad, e.g. bayonet to Dish, etc.

As it has been understood, a problem that will arise when the Euro-connector system will be introduced on the market is that the majority of GPL fleet will still be equipped with national filling units (Dish, bayonet or ACME) while filling points will be equipped to operate on the Euro-connector system, i.e. the filling nozzles will be designed to match the Euro-connector profile.

In order to allow re-fueling of a vehicle equipped with a national connector at a filling station with Euro-connector filling nozzles, a filling adapter and a tool are herein proposed, advantageously in the form of a kit.

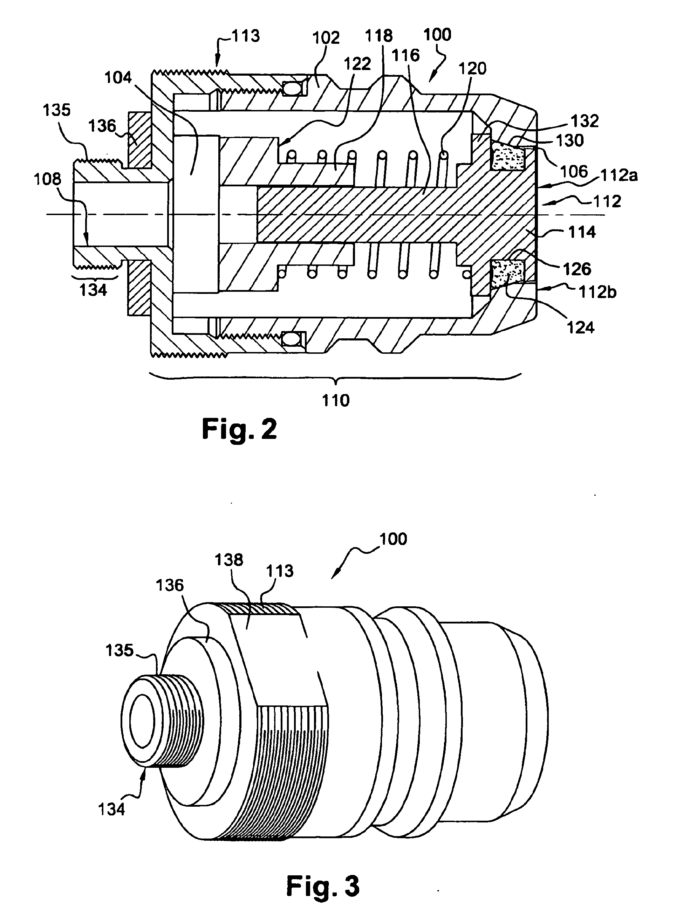

A preferred embodiment of the present filling adapter 100 is shown in Fig.2. The filling adapter 100 comprises a metal body 102 (e.g. brass) with a flow passage 104 therein extending between an inlet port 106 and an outlet port 108. The inlet port 106 is part of a first connector portion 110 designed and dimensioned in accordance with the Euro-connector male section as defined by the above-mentioned Regulation. Therefore it exhibits *i.a.* the following features:
- it is conceived with a male section and its overall dimensions are roughly contained in a cylinder of 33 mm in diameter and height 40 mm;
- it contains a soft-seated non-return valve 112;
- the dead volume between the front sealing surface 112b and the front of the non-return valve 112a does not exceed 0.1 cm³;
- the base (distal from of inlet port 106) is provided with an external thread 113 (M33x2).

More specifically, valve 112 comprises a head 114 and a stem 116 that is axially guided in a sleeve member 118. A compression spring 120 is arranged between a shoulder 122 of the sleeve member 118 and the rear of head 114 so as to bias the valve 112 in closing direction (i.e. counter flow direction). An annular seal 124 is inserted in a peripheral groove 126 in the valve head 112. In the closed position of the non-return valve 112 as illustrated in Fig.2, the valve is so biased that the annular seal 124 is pushed against a peripheral sealing surface of a valve seat 130 surrounding the inner edge of inlet port 106. The inner radial surface of groove 126 is defined by a stop member 132 having a radial extension greater than the outlet port 106 so as to limit the axial displacement of the valve 112.

The outer surface of the valve head 114 is substantially flush with the tip of the euro-connector portion 110, which makes it easily accessible from the inlet port 106.

The outlet port 108 of the filling adapter 100 is part of a second connector portion 134 configured for connection to a national filling unit. In the present embodiment the second fitting takes the form of an external thread 135 that is designed to cooperate with the internal thread 36 arranged about the inlet port 16 of the Dish coupling type filling unit 10. A seal ring 136 is positioned just before the second fitting 134.

Reference sign 138 designates a flat land interrupting the external thread 113. A similar flat land is arranged diametrically opposite flat land 138.

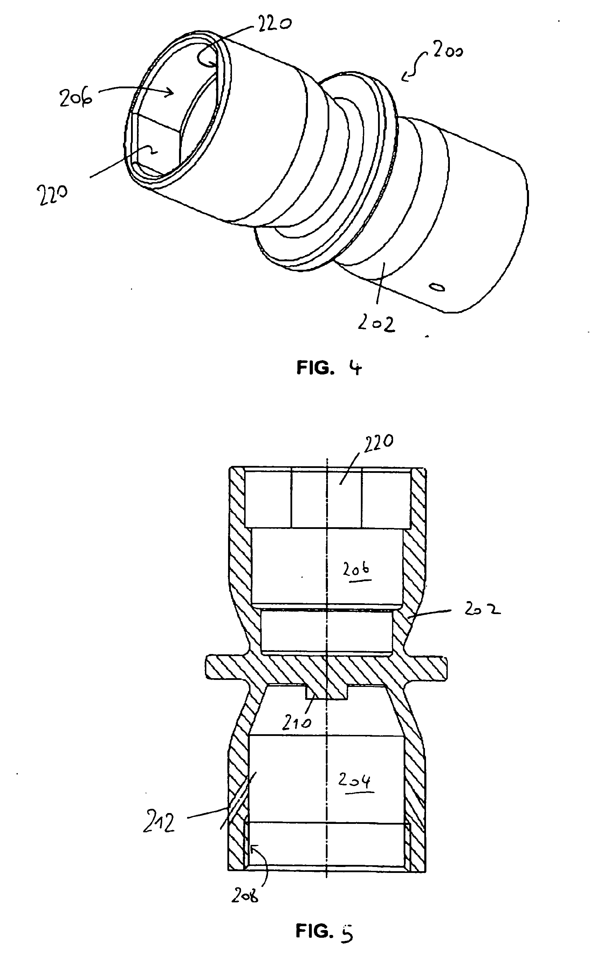

The tool 200 shown in Figs. 4 and 5 is designed to permit an easy dismounting of the euro-connector adapter 100. In the present embodiment, the tool 200 is advantageously designed to perform two operations: degassing and screwing/unscrewing.

As can be seen in the Figs., tool 200 has a body 202 with two cavities 204 and 206. Cavity 204 is designed for the degassing operation, without which it would be very difficult to unscrew the filling adapter 100 after a filling operation. As already explained, upon refuelling gas is imprisoned in the volume between the non-return valves in the filling unit and in the filling adapter. Removal (unscrewing) of the filling adapter 100 without releasing the gas is impossible by hand, and in any case not recommended.

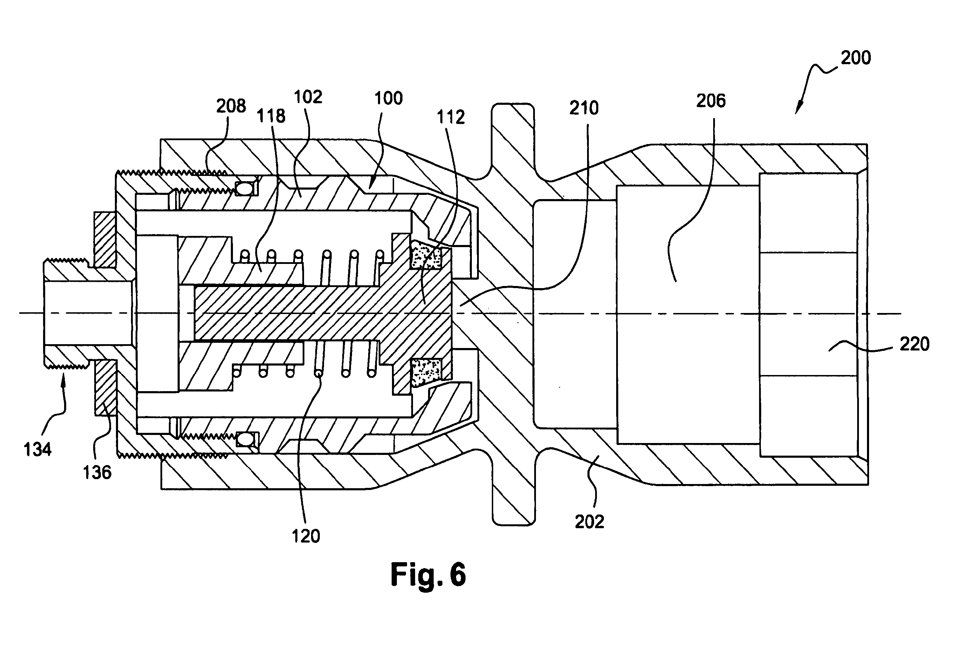

In order to remove the gas imprisoned after a refuelling operation, the first cavity 204 is designed to accommodate the filling adapter 100 therein and comprises an internal thread 208 at its entrance and an axial protrusion 210 at the bottom of the cavity 204. The internal thread 208 matches the external thread 113 at the bottom Euro-connector profile of the adapter 100. To release the imprisoned gas, the tool 200 is positioned to engage the first cavity 204 onto the adapter 100 and the tool 200 is rotated in the screwing direction. As the tool 200 is rotated about itself in the screwing direction relative to the adapter 100, adapter 100 progresses further inside the cavity 204 (respectively the tool 200 moves towards the adapter 100): accordingly the protrusion 210 comes into contact with the non-return valve 112 and pushes the latter off its seat 130, thereby releasing the compressed gas catched downstream thereof. The tool 200 is then removed by unscrewing. This final position where the non-return valve is lifter off its seat is illustrated in Fig.6.

A least one oriented hole 212 (preferably a pair thereof) is advantageously provided in the wall of the first cavity 204 to allow escape of the released gas. The hole 212 is directed towards the car body to avoid any burning of the operator/ driver.

The other cavity 206 of the tool 200 is configured for unscrewing the adapter 100 after degassing and for screwing it onto the filling unit 10. As for the first cavity 204, the inner volume of the second cavity 206 is designed to accommodate the filling adapter 100 therein. However the entrance of the cavity 206 does not comprise a threaded portion but is configured to match the outer dimension of the cross-section at the base of the Euro-connector portion 110 of adapter 100. Accordingly the entry section of the cavity is of circular cross-section interrupted by two diametrically opposite flat lands 220 that cooperate with the flat lands 138 at the base of the Euro-connector portion 110. These cooperating flat lands 220 and 138 permit transmitting a screwing or unscrewing torque to the filling adapter 100 for mounting and dismounting thereof, in a way comparable to a wrench.

## Claims

1. Filling adapter kit for a fluid filling unit, in particular for a filling unit of a vehicle LPG tank, including:
a filling adapter (100) comprising:
- a body (102) with a flow passage (104) therein extending between an inlet port (106) and an outlet port (108); said inlet port (106) being part of a first connector portion (110) configured to allow connection to a filling line, and said outlet port (108) being part of a second connector portion (134) configured for connection to said filling unit (10), said second connector portion (134) comprising a screw thread (135) for mounting on said filling unit (10);
- a non-return valve (112) in said flow passage (104) and cooperating with a seat (130) therein, said non-return valve (112) allowing, in an open position, fluid passage from the inlet port (106) to the outlet port (108) and being accessible from said inlet port (106); and
a tool (200) comprising:
- a body (202) with a cavity (204) therein adapted for engagement at least on said first connector portion (110) of said filling adapter (100);
- a protrusion (210) in said cavity;
- pressing means (208) on said tool (200) designed to cooperate with pressing means (113) on said filling adapter (100) and configured so that said tool can be engaged on said filling adapter to bring said pressing means in an initial operating position and so that rotating said tool results in a corresponding axial displacement of the tool relative to said filling adapter that causes said protrusion (210) to come into abutment with said non-return valve (112) and pushes the latter off its seat (130);
wherein said filling adapter (100) has coupling means that cooperate with respective coupling means on said tool (200) for transmitting both a screwing and an unscrewing torque.

2. Filling adapter kit according to claim 1, wherein said cooperating pressing means comprise an inner thread (208) in said cavity (204) that cooperates with an outer thread (113) on the body (102) of said filling adapter (100) so that screwing said tool on said filling adapter causes said protrusion to come into abutment with said non-return valve and pushes the latter off its seat.

3. Filling adapter kit according to claim 1, wherein said cooperating pressing means comprise at least one cam surface on one of said tool (200) and filling adapter (100) that is adapted to cooperate with at least one cam element on the other of said tool and filling adapter said cam surface and cam element being configured so that rotation of said tool relative to said filling adapter results in a corresponding axial displacement of said tool relative to said filling adapter.

4. Filling adapter kit according to claim 1, 2 or 3, wherein said coupling means are provided in a further cavity (206) adapted for engagement at least on said first connector portion (110).

5. Filling adapter kit according to claim 4, wherein said coupling means comprise a pair of diametrically opposite flat lands (138) that can be engaged by a corresponding pair of flat lands (220) in said further cavity (206).

6. Filling adapter kit according to claim 4, wherein said cooperating coupling means are of the bayonet type.

7. Filling adapter kit according to any one of the preceding claims, wherein at least one degassing hole (212) is provided in a wall of said cavity (204) in said tool (200), said at least one degassing hole being preferably oriented away from the user.

8. Filling adapter kit according to any one of the preceding claims, wherein said non-return valve (112) is arranged in said first connector portion (110).

9. Filling adapter kit according to any one of the preceding claims, wherein said first connector portion (110) is profiled as a Euro-connector.

10. Filling adapter kit according to claim 9, wherein the dead volume between the front sealing surface and the front of the non-return valve (112) does not exceed 0.1 cm³.

11. Filling adapter kit according to any one of the preceding claims, wherein said tool (200) is made from plastic or metal.

12. Filling adapter kit according to claim 4, 5 or 6, comprising a resilient ring in said further cavity (206) for retaining the filling adapter (100) therein.

13. Filling adapter kit according to claim 2, wherein the thread (208) in said cavity has a greater length than the thread on said filling adapter (113).

## Patentansprüche

1. Befülladaptersatz für eine Fluidbefülleinheit, insbesondere für eine Befülleinheit eines LPG-Tanks eines Fahrzeugs, umfassend:
einen Befülladapter (100) umfassend:
- einen Körper (102) mit einem sich darin zwischen einer Einlassöffnung (106) und einer Auslassöffnung (108) erstreckenden Strömungsdurchlass (104); wobei die Einlassöffnung (106) Teil eines ersten Anschlussabschnitts (110) ist, der für die Ermöglichung der Verbindung zu einer Befüllleitung konfiguriert ist, und wobei die Auslassöffnung (108) Teil eines zweiten Anschlussabschnitts (134) ist, der für die Verbindung zu der Befülleinheit (10) konfiguriert ist, wobei der zweite Anschlussabschnitt (134) ein Schraubengewinde (135) zum Anbringen auf der Befülleinheit (10) umfasst;
- ein Rückschlagventil (112) in dem Strömungsdurchlass (104) und zusammenwirkend mit einem Sitz (130) darin, wobei das Rückschlagventil (112) in einer offenen Stellung den Fluiddurchlass von der Einlassöffnung (106) zu der Auslassöffnung (108) ermöglicht und von der Einlassöffnung (106) aus zugänglich ist; und
ein Werkzeug (200) umfassend:
- einen Körper (202) mit einem Hohlraum (204) darin, der für den Eingriff zumindest auf dem ersten Anschlussabschnitt (110) des Befülladapters (100) angepasst ist;
- einen Vorsprung (210) in dem Hohlraum;
- Pressmittel (208) auf dem Werkzeug (200), die derart konstruiert sind, dass sie mit Pressmitteln (113) auf dem Befülladapter (100) zusammenwirken, und derart konfiguriert sind, dass das Werkzeug auf dem Befülladapter in Eingriff genommen werden kann, um die Pressmittel in eine Anfangsbetriebsstellung zu bringen, und dass das Drehen des Werkzeugs zu einer entsprechenden Axialverschiebung des Werkzeugs relativ zu dem Befülladapter führt, die bewirkt, dass der Vorsprung (210) in Anlage mit dem Rückschlagventil (112) gelangt und letzteres aus dessen Sitz (130) drückt;
wobei der Befülladapter (100) Kopplungsmittel aufweist, die mit jeweiligen Kopplungsmitteln auf dem Werkzeug (200) zusammenwirken, um sowohl ein Aufschraub- als auch ein Abschraubmoment zu übertragen.

2. Befülladaptersatz nach Anspruch 1, wobei die zusammenwirkenden Pressmittel ein Innengewinde (208) in dem Hohlraum (204) umfassen, das mit einem Außengewinde (113) auf dem Körper (102) des Befülladapters (100) derart zusammenwirkt, dass das Aufschrauben des Werkzeugs auf den Befülladapter bewirkt, dass der Vorsprung in Anlage mit dem Rückschlagventil gelangt und letzteres aus dessen Sitz drückt.

3. Befülladaptersatz nach Anspruch 1, wobei die zusammenwirkenden Pressmittel mindestens eine Nockenoberfläche auf einem von dem Werkzeug (200) und dem Befülladapter (100) umfassen, die daran angepasst ist, mit mindestens einem Nockenelement auf dem anderen von dem Werkzeug und dem Befülladapter zusammenzuwirken, wobei die Nockenoberfläche und das Nockenelement derart konfiguriert sind, dass die Drehung des Werkzeugs relativ zu dem Befülladapter zu einer entsprechenden Axialverschiebung des Werkzeugs relativ zu dem Befülladapter führt.

4. Befülladaptersatz nach Anspruch 1, 2 oder 3, wobei die Kopplungsmittel in einem weiteren Hohlraum (206) vorgesehen sind, der für den Eingriff zumindest auf dem ersten Anschlussabschnitt (110) angepasst ist.

5. Befülladaptersatz nach Anspruch 4, wobei die Kopplungsmittel ein Paar diametral entgegengesetzter ebener Abflachungen (138) umfassen, das durch ein entsprechendes Paar ebener Abflachungen (220) in dem weiteren Hohlraum (206) in Eingriff genommen werden kann.

6. Befülladaptersatz nach Anspruch 4, wobei die zusammenwirkenden Kopplungsmittel vom Typ Bajonett sind.

7. Befülladaptersatz nach irgendeinem der vorangehenden Ansprüche, wobei mindestens ein Entgasungsloch (212) in einer Wand des Hohlraums (204) in dem Werkzeug (200) vorgesehen ist, wobei das mindestens eine Entgasungsloch vorzugsweise von dem Benutzer wegorientiert ist.

8. Befülladaptersatz nach irgendeinem der vorangehenden Ansprüche, wobei das Rückschlagventil (112) in dem ersten Anschlussabschnitt (110) angeordnet ist.

9. Befülladaptersatz nach irgendeinem der vorangehenden Ansprüche, wobei der erste Anschlussabschnitt (110) als Euro-Anschluss profiliert ist.

10. Befülladaptersatz nach Anspruch 9, wobei das Totvolumen zwischen der vorderen Dichtfläche und der Vorderseite des Rückschlagventils (112) 0,1 cm³ nicht überschreitet.

11. Befülladaptersatz nach irgendeinem der vorangehenden Ansprüche, wobei das Werkzeug (200) aus Kunststoff oder Metall besteht.

12. Befülladaptersatz nach Anspruch 4, 5 oder 6, umfassend einen elastischen Ring in dem weiteren Hohlraum (206) zum Festhalten des Befülladapters (100) darin.

13. Befülladaptersatz nach Anspruch 2, wobei das Gewinde (208) in dem Hohlraum eine größere Länge aufweist als das Gewinde (113) auf dem Befülladapter.

## Revendications

1. Kit d'adaptateur de remplissage pour une unité de remplissage de fluide, en particulier pour une unité de remplissage d'un réservoir de GPL de véhicule, incluant :
un adaptateur de remplissage (100) comprenant :
- un corps (102) avec un passage de flux (104) dans celui-ci s'étendant entre un orifice d'entrée (106) et un orifice de sortie (108) ; ledit orifice d'entrée (106) faisant partie d'une première partie de connecteur (110) configurée pour permettre une connexion à une ligne de remplissage, et ledit orifice de sortie (108) faisant partie d'une deuxième partie de connecteur (134) configurée pour une connexion à ladite unité de remplissage (10), ladite deuxième partie de connecteur (134) comprenant un filetage de vis (135) pour un montage sur ladite unité de remplissage (10) ;
- un clapet anti-retour (112) dans ledit passage de flux (104) et coopérant avec un siège (130) dans celui-ci, ledit clapet anti-retour (112) permettant, dans une position ouverte, un passage de fluide de l'orifice d'entrée (106) jusqu'à l'orifice de sortie (108) et étant accessible par ledit orifice d'entrée (106) ; et
un outil (200) comprenant :
- un corps (202) avec une cavité (204) dans celui-ci adapté à un engagement au moins sur ladite première partie de connecteur (110) dudit adaptateur de remplissage (100) ;
- une saillie (210) dans ladite cavité ;
- un moyen de pression (208) sur ledit outil (200) conçu pour coopérer avec un moyen de pression (113) sur ledit adaptateur de remplissage (100) et configuré de telle sorte que ledit outil peut être engagé sur ledit adaptateur de remplissage pour amener ledit moyen de pression dans une position opérationnelle initiale et de sorte qu'une rotation dudit outil résulte en un déplacement axial correspondant de l'outil par rapport audit adaptateur de remplissage qui fait que ladite saillie (210) vient en butée sur ledit clapet anti-retour (112) et pousse ce dernier hors de son siège (130) ;
dans lequel ledit adaptateur de remplissage (100) a un moyen de couplage qui coopère avec un moyen de couplage respectif sur ledit outil (200) pour transmettre un couple de vissage et un couple de dévissage.

2. Kit d'adaptateur de remplissage selon la revendication 1, dans lequel lesdits moyens de pression coopérants comprennent un filetage intérieur (208) dans ladite cavité (204) qui coopère avec un filetage extérieur (113) sur le corps (102) dudit adaptateur de remplissage (100) de sorte que le vissage dudit outil sur ledit adaptateur de remplissage fait que ladite saillie vient en butée contre ledit clapet anti-retour et pousse ce dernier hors de son siège.

3. Kit d'adaptateur de remplissage selon la revendication 1, dans lequel lesdits moyens de pression coopérants comprennent au moins une surface de came sur un desdits outil (200) et adaptateur de remplissage (100) qui est adaptée à coopérer avec au moins un élément de came sur l'autre desdits outil et adaptateur de remplissage, lesdits surface de came et élément de came étant configuré de telle sorte qu'une rotation dudit outil par rapport audit adaptateur de remplissage résulte en un déplacement axial correspondant dudit outil par rapport audit adaptateur de remplissage.

4. Kit d'adaptateur de remplissage selon la revendication 1, 2 ou 3, dans lequel lesdits moyens de couplage sont prévus dans une autre cavité (206) adaptée à un engagement au moins sur ladite première partie de connecteur (110).

5. Kit d'adaptateur de remplissage selon la revendication 4, dans lequel lesdits moyens de couplage comprennent une paire de méplats (138) diamétralement opposés qui peuvent être engagés par une paire correspondante de méplats (220) dans ladite autre cavité (206).

6. Kit d'adaptateur de remplissage selon la revendication 4, dans lequel lesdits moyens de couplage coopérants sont du type à baïonnette.

7. Kit d'adaptateur de remplissage selon l'une quelconque des revendications précédentes, dans lequel au moins un trou de dégazage (212) est prévu dans une paroi de ladite cavité (204) dans ledit outil (200), ledit au moins un trou de dégazage étant préférablement orienté à l'opposé de l'utilisateur.

8. Kit d'adaptateur de remplissage selon l'une quelconque des revendications précédentes, dans lequel ledit clapet anti-retour (112) est agencé dans ladite première partie de connecteur (110).

9. Kit d'adaptateur de remplissage selon l'une quelconque des revendications précédentes, dans lequel ladite première partie de connecteur (110) est profilée comme un connecteur Euro.

10. Kit d'adaptateur de remplissage selon la revendication 9, dans lequel le volume mort entre la surface d'étanchéité avant et l'avant du clapet anti-retour (112) n'excède pas 0,1 cm³.

11. Kit d'adaptateur de remplissage selon l'une quelconque des revendications précédentes, dans lequel ledit outil (200) est constitué de plastique ou de métal.

12. Kit d'adaptateur de remplissage selon la revendication 4, 5 ou 6, comprenant un anneau résilient dans ladite autre cavité (206) pour maintenir l'adaptateur de remplissage (100) dans celle-ci.

13. Kit d'adaptateur de remplissage selon la revendication 2, dans lequel le filetage (208) dans ladite cavité a une longueur plus grande que le filetage sur ledit adaptateur de remplissage (113).
